# EUROPÄISCHE PATENTSCHRIFT

(11) **EP 4 269 963 B1**
(45) Veröffentlichungstag und Bekanntmachung des Hinweises auf die Patenterteilung: **11.06.2025**
(21) Anmeldenummer: 23169805.1
(22) Anmeldetag: 25.04.2023
(51) Int. Cl.: G01J 3/14

(54) **MONOCHROMATOR ZUR MONOCHROMATISIERUNG ELEKTROMAGNETISCHER STRAHLUNG**
MONOCHROMATOR FOR MONOCHROMATOR-BASED ELECTROMAGNETIC RADIATION
MONOCHROMATEUR POUR LA MONOCHROMISATION DE RAYONNEMENT ÉLECTROMAGNÉTIQUE

(30) Priorität: 28.04.2022 DE 102022110306
(43) Veröffentlichungstag der Anmeldung: 01.11.2023
(73) Patentinhaber: Helmholtz-Zentrum Berlin für Materialien und Energie GmbH, 14109 Berlin (DE); Helmholtz-Zentrum hereon GmbH, 21502 Geesthacht (DE)
(72) Erfinder: Dittrich, Thomas, 12205 Berlin (DE); Fengler, Steffen, 16348 Wandlitz (DE)

(56) Entgegenhaltungen:
- DE-A1- 4 128 506
- US-A1- 2009 040 614
- BROWN ET AL: "Ultraviolet, visible, near-infrared spectrophotometers", 1 January 2018, EWING'S ANALYTICAL INSTRUMENTATION HANDBOOK; 4TH ED, CRC PRESS, US, ISBN: 978-1-4822-1867-1, pages: 117 - 127, XP009544440

## Beschreibung

Die Erfindung betrifft einen Monochromator und ein System, sowie insbesondere computerimplementierte Verfahren zur Monochromatisierung elektromagnetischer Strahlung. Monochromatoren enthalten wegen ihrer, gegenüber anderen dispersiven Elementen verhältnismäßig hohen spektralen Auflösung häufig Beugungsgitter, wobei die Strahlführung innerhalb des Monochromators über Spiegeloptiken realisiert wird. Allerdings erweisen sich derartige Monochromatoren für größere Spektralbereiche als nachteilig, denn dies erfordert in der Regel mehrere Beugungsgitter verschiedener Gitterkonstanten und entsprechende Ordnungsfilter. Eine versatzfreie und kontinuierliche Messung eines entsprechend großen Spektralbereichs mittels eines solchen Monochromators ist daher mit viel Aufwand und vielen Fehlerquellen verbunden.

In dem Aufsatz von C. W. Brown et al. (Ultraviolet, visible, near-infrared spectrophotorneters", 1. Januar 2018, Ewing's Analytical Instrumentation Handbook, 4th Ed., CRC Pess, US, Seiten 117-127) ist ein sogenannter "Bunsen Monochromator" offenbart, der den nächsten Stand der Technik bildet. Der Monochromator umfasst eine Eintrittsblende (Schlitz), eine erste Linse zur Kollimation des durch die Eintrittsblende einfallenden Lichts, welches im weiteren Strahlengang auf ein Prisma zur Brechung von einfallendem Licht, fällt. Das von dem Prisma ausfallende, gebrochene Licht wird bezüglich einer ausgesuchten Wellenlänge von einer weiteren, zweiten Linse auf eine Austrittsblende (Schlitz) fokussiert und ist damit nach Durchtritt durch die Austrittsblende monochromatisiert.

In der DE 41 28 506 A1 ist ein Verfahren offenbart, welches in einem Spektrometer, anzuwenden ist, und wobei zur Beseitigung der chromatischen Längsaberration, bezüglich unterschiedlicher Wellenlägen des durch das Prisma gebrochenen Lichts, eine Verschiebung optischer Elemente gegeneinander vorgesehen ist.

Eine Anordnung von zwei dispersiven Filtern hintereinander zu einem "Doppel-Filter" ist in der US 2009/0040614 A1 offenbart. Der vordere der dispersiven Filter unterscheidet sich dabei von dem in dem Aufsatz von C. W. Brown offenbarten "Bunsen Monochromator" dadurch, dass die zweite Linse das aus dem Prisma ausfallende, gebrochene Licht kollimiert und nicht fokussiert und somit über den zweiten, nachgeschalteten Monochromator polychromatisches Licht auf eine Austrittsblende fokussiert wird.

Der vorliegenden Erfindung liegt hiervon ausgehend die Aufgabe zugrunde, einen Monochromator bereitzustellen, welche im Hinblick auf eine versatzfreie und kontinuierliche Einstellbarkeit oder Messung von Spektralbereichen gegenüber dem Stand der Technik verbessert ist.

Diese Aufgabe wird durch einen Monochromator mit den Merkmalen des Anspruchs 1 gelöst.

Vorteilhafte Ausgestaltungen dieser Erfindungsaspekte sind in den entsprechenden Unteransprüchen angegeben und werden nachfolgend beschrieben.

Ein erster Aspekt der Erfindung betrifft gemäß Anspruch 1 einen Monochromator, mindestens aufweisend eine Eintrittsöffnung für elektromagnetische Strahlung sowie eine Austrittsöffnung, ein Prisma und eine erste und eine zweite Linse. Durch diese Elemente des Monochromators ist ein Strahlengang im Monochromator gebildet, der für die Funktionalität des Monochromators folgende Merkmale aufweist. Der Fokus der ersten Linse fällt mit der Eintrittsöffnung zusammen und der Fokus der zweiten Linse fällt mit der Austrittsöffnung zusammen. Entsprechend liegt die Eintrittsöffnung in der Flucht der optischen Achse der ersten Linse und die Austrittsöffnung in der Flucht der optischen Achse der zweiten Linse. Die erste Linse kollimiert die durch die Eintrittsöffnung einfallende Strahlung. Das Prisma ist im Strahlengang hinter der ersten Linse angeordnet. Bei den Prismen des erfindungsgemäßen Monochromators handelt es sich um Dispersionsprismen, in denen die einfallende elektromagnetische Strahlung wellenlängenabhängigen (dispersiv) abgelenkt wird. Das Prisma im Monochromator ist um eine feste Achse drehbar angeordnet. Dies ermöglicht es, durch Drehung des Prismas, eine ausgesuchte Wellenlänge der elektromagnetischen Strahlung, die einen zugehörigen Ablenkwinkel im Prisma hat, im Strahlengang nach dem Prisma mit der optischen Achse der zweiten Linse zur Deckung zu bringen, so dass diese ausgesuchte Wellenlänge von der zweiten Linse auf die Austrittsöffnung fokussiert wird und aus der Austrittsöffnung des Monochromators auskoppelbar ist. Die zweite Linse bündelt die Strahlen. Die Anordnung beider Linsen, des Prismas und der Eintritts- und Austrittsöffnung, erfolgt so, dass eine Wellenlänge eines einfallenden elektromagnetischen Strahls im Fokus der zweiten Linse auf die Austrittsöffnung abgebildet wird. Das Prisma ist mindestens zwischen einer ersten und einer zweiten Stellung drehbar, so dass mindestens eine Monochromatisierung von zwei unterschiedlichen Wellenlägen, entsprechend der mindestens zwei Stellungen des Prismas, im Monochromator realisierbar ist. In vorteilhafter Weise ist das Prisma in einem Bereich drehbar, der es erlaubt in einem ausgesuchten Spektralbereich, entsprechend einer Vielzahl von Stellungen des Prismas, zu monochromatisieren. Da die Brennweite einer Linse generell wellenlängenabhängig ist, ist die zweite Linse entlang ihrer optischen Achse verschiebbar angeordnet, so dass die chromatische Verschiebung des Fokus kompensierbar ist.

Die in den Monochromator einfallende elektromagnetische Strahlung erfährt bei der Transmission durch das Prisma an dessen Grenzflächen zu dem Medium, das das Prisma umgibt, jeweils eine Brechung, wobei insbesondere der Austrittswinkel aus dem Prisma dispersiv, also abhängig von der Wellenlänge der elektromagnetischen Strahlung ist. Der Austrittswinkel hängt weiterhin vom Brechungsindex des Prismas sowie des, das Prisma umgebenden Mediums sowie dem Winkel ab, in dem die elektromagnetische Strahlung auf das Prisma auftritt. Eine Drehung des Prismas führt bei ortsfester Ein- und Austrittsöffnung folglich zu durch die Austrittsöffnung transmittierten veränderten Wellenlängen, sodass die transmittierte Wellenlänge mittels des Monochromators vorteilhaft zwischen der mindestens ersten und zweiten Wellenlänge durchstimmbar bzw. auswählbar ist. Über die erfindungsgemäße zweite Linse kann die ausgewählte Wellenlänge weiterhin auf die Austrittsöffnung fokussiert werden. Zur Kompensation der bei Drehung des Prismas entstehenden Verschiebung des Fokus (durch eine veränderte Wellenlänge), welcher durch den ebenfalls dispersiven Charakter der Linse bedingt ist, ist die zweite Linse erfindungsgemäß entlang ihrer optischen Achse zwischen der ersten und der zweiten Position verschiebbar. Somit kann vorteilhaft je nach Stellung des Prismas die zweite Linse derart verschoben werden, dass der Fokus der ausgewählten Wellenlänge mit der Austrittsöffnung zusammenfällt, sodass die ausgewählte Wellenlänge aus dem Monochromator ausgekoppelt wird, während andere Wellenlängen beispielsweise über eine Blende des Monochromators absorbiert und nicht aus der Austrittsöffnung des Monochromators ausgekoppelt werden.

Unter Monochromatisierung ist hier eine Einschränkung in der spektralen Breite um eine bestimmte Wellenlänge, die über die Drehung des Prismas auswählbar ist, zu verstehen. Die Anführung einer ausgesuchten Wellenlänge, auf die die Monochromatisierung erfolgt, ist in der folgenden Beschreibung immer unter dem Aspekt einer gewissen spektralen Breite, um diese eine ausgesuchte/bestimmte Wellenläge, die das Ziel der Monochromatisierung ist, aufzufassen.

Gemäß einer Ausführungsform der Erfindung ist weiterhin die erste Linse entlang ihrer optischen Achse zwischen der Eintrittsöffnung und dem Prisma verschiebbar, sodass durch die Eintrittsöffnung einfallende elektromagnetische Strahlung durch Verschieben der ersten Linse entlang ihrer optischen Achse hin zum oder weg vom Prisma kollimierbar ist.

Die erste und/oder die zweite Linse sind dabei über eine jeweils zugehörige Schiene oder Leiste zur Verschiebung entlang ihrer optischen Achse geführt oder führbar sein.

Erfindungsgemäß ist eine Schiene oder Leiste, welche sich zwischen dem Prisma und der Austrittsöffnung erstreckt und auf der die zweite Linse verschiebbar angeordnet ist, um eine Drehachse drehbar, welche lokal mit der Austrittsöffnung zusammenfällt und wobei die Drehachse senkrecht zu der, von den optischen Achsen in einem Monochromator-System aufgespannten Ebene orientiert ist und somit zu der Drehachse des Prismas parallel angeordnet ist. Insbesondere ist die Schiene oder Leiste an einer Halterung oder Aufhängung an dem Prisma zur Drehung führbar oder geführt, sodass sich bei Drehung des Prismas die Schiene oder Leiste mit der darauf angeordneten systeminternen Linse um die Drehachse dreht. Dies ermöglicht in technisch einfacher Weise eine Wirkverbindung zwischen der Drehung des Prismas und dem Strahlengang, wobei letzterer durch die entsprechende Drehung der Schiene oder Leiste der Drehung des Prismas nachgeführt ist, so dass der Strahlengang bie drehung des Prismas erhalten bleibt. Insbesondere wird die Linse, welche zwischen dem Prisma und der Austrittsöffnung an der Schiene oder Leiste verschiebbar befestigt ist, bei Drehung des Prismas ebenfalls entsprechend gedreht, was die Strahlführung zusätzlich vereinfacht. Der Begriff "Aufhängung" umfasst insbesondere auch eine Halterung jeglicher Art im Kontext dieser Spezifikation. Die Aufhängung erfolgt an einer Prismenfläche des Prismas (die der entspricht, aus der ein aus dem Prisma ausfallender Strahl austritt) und an der Austrittsöffnung. Die Halterung ist dabei zudem an der Prismenflächen in vorteilhafter Weise so angeordnet, dass die optischen Achsen der ebenfalls an der Schiene oder Leiste zur Verschiebung angeordneten Linsen des internen Linsenpaars sich mittig mit der Prismenfläche schneiden.

Ein zweiter Aspekt der Erfindung betrifft ein Monochromator-System, aufweisend mindestens zwei Monochromatoren gemäß dem ersten Aspekt der Erfindung.

In einer ersten Ausführungsform ist vorgesehen, dass die Monochromatoren des Monochromator-Systems paarweise jeweils über eine gemeinsame, geteilte Öffnung innerhalb des Systems aneinander angrenzen, indem die geteilte Öffnung gleichzeitig eine Austrittsöffnung eines ersten, im Strahlengang vorderen Monochromators sowie eine Eintrittsöffnung eines zweiten, im Strahlengang direkt nachfolgenden Monochromators bildet. In dieser Ausführungsform können folglich mehrere Monochromatoren in Serie angeordnet werden, wobei die aus dem Monochromator-System austretende Strahlung vorteilhaft mit jedem aufeinanderfolgenden Monochromator zumindest teilweise von ungewollten Streulichtanteilen befreit wird und die Güte der Monochromatisierung somit erhöht ist. Da die Austrittsöffnung eines ersten Monochromators mit der Eintrittsöffnung eines zweiten Monochromators in einer geteilten Öffnung des Systems zusammenfällt, kann das System ebenfalls vorteilhaft entsprechend kompakt gestaltet werden. Beispielsweise kann eine derartige geteilte Öffnung im System durch eine Blende oder einen Spalt gebildet werden, der gleichzeitig die Austrittsöffnung des ersten Monochromators sowie die Eintrittsöffnung des zweiten Monochromators bildet. Die Anordnung der mindestens zwei Monochromatoren in dem System erfolgt dabei derart, dass die optischen Achsen von jeweils einer zweiten Linse eines im Strahlengang zuvor angeordneten Monochromators mit der ersten Linse eines im Strahlengang im direkten Anschluss nachfolgenden Monochromators zusammenfallen, so dass eine gemeinsame optische Achse resultiert, und die Fokusse beider Linsen in der geteilten Öffnung zwischen den betreffenden Monochromatoren liegen. Ein derartiges Linsenpaar, das also zwischen dem Prisma eines im Strahlengang vorderen Monochromators und dem Prisma eines direkt anschließenden Monochromators liegt, wird im Folgenden als systemeigenes Linsenpaar bezeichnet.

Das Monochromator-System weist weiterhin eine Eintrittsöffnung an einem ersten, zuvorderst angeordneten Monochromator sowie eine Austrittsöffnung am Ende des Strahlengangs in einem zuletzt angeordneten Monochromator auf.

Eine Drehung einzelner, mehrerer oder auch aller Prismen zwischen deren zugehöriger mindestens ersten und zweiten Stellung ermöglicht dabei eine Änderung eines aus der Austrittsöffnung des Monochromator-Systems austretenden Wellenlänge der elektromagnetischen Strahlung, sodass diese Wellenlänge mittels des Systems einstellbar bzw. auswählbar ist.

Weiterhin kann durch Verschieben einzelner, mehrerer oder auch aller Linsen entlang ihrer optischen Achsen, die durch die Drehung einzelner, mehrerer oder auch aller Prismen resultierende chromatische Verschiebung der Fokusse so kompensiert werden, dass im zuletzt angeordneten Monochromator der Fokus der zweiten Linse weiterhin in der Austrittsöffnung des Systems liegt und/oder die Fokusse der zweiten Linsen in den im System von den Monochromatoren geteilten Öffnungen. Insbesondere können einzelne oder mehrere Linsen derart entlang ihrer optischen Achsen verschoben werden, dass eine bestimmte Wellenlänge innerhalb des Systems auf die jeweilige Öffnung (geteilte Öffnung oder Austrittsöffnung) fokussiert wird. Durch die Fokussierung einer Wellenlänge wird somit vorteilhaft auch eine Selektion der betreffenden Wellenlänge beim Übergang von einem ersten Monochromator in einen zweiten Monochromator über die geteilte Öffnung erreicht, wobei andere Wellenlängen beispielsweise durch eine, die geteilte Öffnung umgebende Blende innerhalb des Systems absorbiert werden können.

In einer Ausführungsform der Erfindung ist vorgesehen, dass die Prismen der einzelnen Monochromatoren im Monochromator-System derart zueinander anordenbar und ausrichtbar sind, dass eine Drehung der Prismen zwischen ihrer jeweils mindestens ersten und zweiten Stellung für jeden Monochromator eine Abbildung derselben Wellenlänge auf die, dem jeweiligen Prisma entlang des Strahlengangs jeweils nachgestellte, geteilte Öffnung oder auf die Austrittsöffnung bewirkt. Insbesondere sind in dem System die Prismen der Monochromatoren derart wirkverbunden, dass eine Drehung eines Prismas zwischen der mindestens ersten und zweiten Stellung eine Abbildung derselben Wellenlänge auf die dem Prisma nachgestellte, geteilte Öffnung bzw. auf die Austrittsöffnung bewirkt. Somit wird vorteilhaft erreicht, dass die ausgewählte Wellenlänge über mehrere Monochromatoren entlang des Strahlengangs bis zur Austrittsöffnung des Systems führbar ist, während andere Wellenlängen zumindest teilweise innerhalb des Systems absorbiert werden und nicht durch die Austrittsöffnung gelangen.

Insbesondere können zum Beispiel die Prismen zweier aneinander angrenzender Monochromatoren des Monochromator-Systems derart wirkverbunden sein, dass die Drehung eines ersten Prismas eines ersten Monochromators um einen ersten Winkel zu einer Drehung eines zweiten Prismas eines zweiten Monochromators um einen zudem ersten Winkel gegengleichen (in umgekehrter Drehrichtung und vom selben Betrag) zweiten Winkel führt. Somit kann eine Parallelverschiebung der elektromagnetischen Strahlung, die aus dem zweiten Prisma austritt, gegenüber der elektromagnetischen Strahlung, welche in das erste Prisma eintritt, erreicht werden. Die Voraussetzung hierfür ist eine gerade Anzahl von Monochromatoren im Monochromator-System. Dies ist insbesondere zur Integration des Systems in bestehende optische Vorrichtungen mit vorgegebenem Strahlengang von Vorteil. Gemäß einer Ausführungsform der Erfindung sind die systeminternen Linsenpaare entlang ihrer optischen Achse derart geführt oder führbar, dass die auswählbare Wellenlänge auf die Austrittsöffnung des Systems fokussierbar ist und wobei die elektromagnetische Strahlung nach Passieren der jeweiligen geteilten Öffnung kollimierbar ist.

Gemäß einer Ausführungsform der Erfindung sind die systeminternen Linsenpaare und die jeweils zwischen ihnen liegende geteilte Öffnung entlang der optischen Achse beider Linsen zueinander ausgerichtet, wobei die systeminternen Linsenpaare entlang dieser optischen Achse verschiebbar sind. Zur Verschiebung sind die Linsen der systeminternen Linsenpaare entlang ihrer optischen Achse verschiebbar entlang einer gemeinsamen Schiene oder Leiste montiert sein. In alternativer Ausführungsform ist vorgesehen, dass die Prismen aneinandergrenzender Monochromatoren und/oder die systeminternen Linsenpaare zwischen diesen Prismen entlang der jeweils zugehörigen optischen Achse an voneinander getrennten Schienen oder Leisten an entsprechenden Schienensegmenten oder Leistensegmenten angeordnet sind. Durch die hier vorgeschlagene Führung entlang beispielsweise Schienen oder Schienensegmenten ist die Strahlführung durch den Monochromator bzw. durch das System wesentlich vereinfacht.

In einer weiteren Ausführungsform der Erfindung sind die Schienen oder Leisten zwischen den Prismen aneinandergrenzender Monochromatoren und/oder den systeminternen Linsenpaaren zwischen diesen Prismen um eine jeweilige zugehörige Drehachse drehbar, welche lokal mit der jeweiligen geteilten Öffnung zusammenfällt und wobei die Drehachse senkrecht zu der, von den optischen Achsen in einem Monochromator-System aufgespannten Ebene orientiert ist und somit mit den Drehachsen der Prismen parallel angeordnet ist. Insbesondere sind die Schienen oder Leisten an jeweils einer Halterung oder Aufhängung an den zugehörigen Prismen der aneinandergrenzenden Monochromatoren führbar oder geführt, sodass sich bei Drehung der Prismen die jeweilige Schiene oder Leiste mit den ebenfalls angeordneten systeminternen Linsenpaaren um die Drehachse dreht. Dies ermöglicht in technisch einfacher Weise einerseits eine Wirkverbindung zwischen jeweils zwei Prismen aneinandergrenzender Monochromatoren, wobei bei einer Drehung eines Prismas, diese Drehung auf das andere, wirkverbundene Prisma direkt zu einer Drehung führt, und andererseits die Schienen oder Leisten mit gedreht werden, so dass der Strahlengang erhalten bleibt. Insbesondere können die Linsen der systeminternen Linsenpaare zwischen den Prismen an den Schienen oder Leisten verschiebbar befestigt sein, sodass diese bei Drehung ebenfalls entsprechend gedreht werden, was die Strahlführung innerhalb des Systems zusätzlich vereinfacht. Der Begriff "Aufhängung" umfasst insbesondere auch eine Halterung jeglicher Art im Kontext dieser Spezifikation. Die Aufhängung erfolgt an einer Prismenfläche eines ersten Prismas in einem vorderen Monochromator des Systems, an der die im Prisma gebeugten Strahlen austreten und an einer Prismenfläche eines zweiten Prismas eines an den vorderen Monochromator im Strahlengang direkt angrenzenden Monochromators, an der die Strahlen im Strahlengang in das Prisma einfallen. Die Halterung ist dabei zudem an den Prismenflächen in vorteilhafter Weise so angeordnet, dass die optischen Achsen der ebenfalls an der Schiene oder Leiste zur Verschiebung angeordneten Linsen des internen Linsenpaars sich mittig mit den Prismenflächen schneiden.

Die "Wirkverbindung" zwischen den Prismen, ist neben der oben beschriebenen mechanischen Umsetzung in ihrem technischen Effekt, der abgestimmten Drehung der Prismen, auch durch eine entsprechende Ansteuerung der Prismen über eine externe Steuerung zu erzielen. Die systeminternen Linsen sind ebenso über entsprechende Mittel, neben einer Verschiebung entlang ihrer optischen Achsen, verschwenkbar anordenbar, wodurch die Drehung der Schienen oder Leisten mit den angeordneten Linsen entsprechend einer Drehung der Prismen, für jede der Linsen separat emulierbar ist. Dadurch wird die erfinderische Idee, unter den optischen Elementen (Blenden, Linsen, Prismen) eines Monochromators oder Monochromator-Systems eine, auf eine Wellenlänge abgestimmte Anpassung der Orientierung der optischen Elemente zueinander vorzunehmen auch ohne die Schienen oder Leisten durchführbar. Dies ist aber nicht beansprucht.

Gemäß einer weiteren Ausführungsform der Erfindung weist der Monochromator oder das Monochromator-System zumindest eine weitere Linse zur Kollimation und/oder Fokussierung der elektromagnetischen Strahlung, insbesondere der mindestens ersten und/oder zweiten Wellenlänge der elektromagnetischen Strahlung auf. Die weitere Linse kann dabei auch auf einer dem Prisma abgewandten Seite der Eintrittsöffnung und/oder der Austrittsöffnung des Monochromators oder des Systems angeordnet sein. Die weitere Linse kann weiterhin entlang ihrer optischen Achse verschiebbar angeordnet sein, um durch Verschieben die Kollimation und/oder Fokussierung der elektromagnetischen Strahlung wellenlängenabhängig anzupassen.

In einer Ausführungsform der Erfindung ist jeweils die Eintrittsöffnung, die Austrittsöffnung und/oder zumindest eine jeweilige geteilte Öffnung eines Monochromators alleinig oder mehrerer im System spaltförmig ausgebildet, wobei die Spaltbreite zum Beispiel im Bereich von 50 µm bis 500 µm liegt.

Ein dritter Aspekt der Erfindung betrifft ein Verfahren, insbesondere ein computerimplementiertes Verfahren zur Monochromatisierung elektromagnetischer Strahlung mittels des Monochromators gemäß dem ersten Aspekt der Erfindung. Das Verfahren gemäß dem dritten Aspekt der Erfindung weist zumindest die folgenden Schritte auf:
i) Einkoppeln von elektromagnetischer Strahlung in den Monochromator durch die Eintrittsöffnung und
ii) Verschieben der zweiten Linse entlang des Strahlengangs, sodass eine Wellenlänge der elektromagnetischen Strahlung, die einer Stellung des Prismas im Monochromator entspricht, auf die Austrittsöffnung fokussiert wird.

Optional kann, bevor die elektromagnetische Strahlung in den Monochromator eingekoppelt wird, diese über eine weitere Linse auf die Eintrittsöffnung des Monochromators kollimiert oder fokussiert werden. Weiterhin ist vorgesehen, dass die aus dem Monochromator austretende Wellenlänge der elektromagnetischen Strahlung über eine weitere Linse kollimiert oder fokussiert wird, beispielweise zum Beleuchten oder Bestrahlen einer Probe.

In einer Ausführungsform der Erfindung ist außerdem vorgesehen, dass das Prisma des Monochromators zwischen der mindestens ersten und der zweiten Stellung gedreht wird und dabei die zweite Linse derart entlang des Strahlengangs verschoben wird, dass die, als Folge der Drehung des Prismas geänderte Wellenlänge und die damit auftretende chromatische Verschiebung des Fokus an der Austrittsöffnung kompensiert wird, sodass der Fokus auf die Austrittsöffnung abgebildet wird.

Insbesondere ist vorgesehen, dass die durch die Eintrittsöffnung in den Monochromator eingekoppelte elektromagnetische Strahlung durch Verschieben der ersten Linse des jeweiligen Monochromators entlang ihrer optischen Achse in Richtung der Oberfläche des Prismas des jeweiligen Monochromators oder von diesem weg kollimiert wird. Durch ein derartiges Verschieben der ersten Linse des jeweiligen Monochromators wird weiterhin die chromatische Verschiebung des Fokus an der Austrittsöffnung zumindest teilweise kompensierbar.

Insbesondere die Verschiebung der ersten und/oder der zweiten Linse können dabei computergesteuert sein. Hierfür kann zum Beispiel eine Steuerungseinheit eine Stellung des Prismas erfassen und die für diese Stellung in Richtung der Austrittsöffnung abgebildete Wellenlänge ermitteln. Weiterhin kann die Steuerungseinheit basierend auf der ermittelten Wellenlänge diejenige Verschiebung der zweiten und/oder der ersten Linse ermitteln, die das Fokussieren der Wellenlänge auf die Austrittsöffnung bewirkt. Schließlich kann die Steuerungseinheit die ermittelte Verschiebung der zweiten und/oder der ersten Linse bewirken, beispielsweise mittels einer mit der Steuerungseinheit wirkverbundenen Aktuatoreinheit. Weiterhin ist vorgesehen, dass die Steuerungseinheit eine Drehung des Prismas bewirkt und dabei die erste und/oder die zweite Linse derart verschiebt, dass der jeweilige in Richtung der Austrittsöffnung abgebildete Wellenlänge während der Drehung auf die Austrittsöffnung fokussiert wird. Die Steuerungseinrichtung kann weiterhin dazu ausgebildet sein, die Fokusse der in Richtung der Austrittsöffnung abgebildeten Wellenlängen in Abhängigkeit des Materials des Prismas und der Linsen, sowie des den Monochromator bzw. das Prisma umgebenden Mediums und insbesondere der Temperatur des Mediums zu ermitteln und basierend auf den so ermittelten Fokuspunkten entsprechende Verschiebungen der ersten und/oder der zweiten Linse zu veranlassen, sodass die Fokusse insbesondere für gegebene Materialien bzw. Medien und deren Temperaturen auf die Austrittsöffnung abbildbar sind. Die Steuerungseinheit kann Teil eines Computers sein oder mit einem Computer verbunden sein.

Ein vierter Aspekt der Erfindung betrifft ein Verfahren zur Monochromatisierung elektromagnetischer Strahlung mittels des Monochromator-Systems gemäß dem zweiten Aspekt der Erfindung. Das Verfahren gemäß dem vierten Aspekt der Erfindung weist zumindest die folgenden Schritte auf:
i) Einkoppeln von elektromagnetischer Strahlung in das Monochromator-System durch die Eintrittsöffnung und
ii) Verschieben zumindest einer zweiten Linse der Monochromatoren des Monochromator-Systems entlang ihrer optischen Achse, sodass eine Wellenlänge der elektromagnetischen Strahlung, die der Stellung der Prismen der Monochromatoren entspricht, in Richtung der jeweiligen geteilten Öffnung sowie der Austrittsöffnung abgebildet wird.

Optional kann, bevor die elektromagnetische Strahlung in das System eingekoppelt wird, diese über eine weitere Linse auf die Eintrittsöffnung des Systems kollimiert oder fokussiert werden. Weiterhin ist vorgesehen, dass die aus dem System austretende Wellenlänge der elektromagnetischen Strahlung über eine weitere Linse kollimiert oder fokussiert wird beispielweise zum Beleuchten oder Bestrahlen einer Probe.

Gemäß einer Ausführungsform der Erfindung ist außerdem vorgesehen, dass die Prismen der Monochromatoren des Monochromator-Systems zwischen den jeweiligen mindestens ersten und zweiten Stellung verdreht werden und dabei die jeweilige zweite Linse der Monochromatoren derart entlang ihrer optischen Achse verschoben wird, dass die im Zuge der Drehung der Prismen und damit verbundene Änderung der Wellenlänge auftretende chromatische Verschiebung des Fokus an der Austrittsöffnung kompensiert wird, sodass der Fokus auf die Austrittsöffnung des Systems abgebildet wird.

Insbesondere ist vorgesehen, dass die durch die Eintrittsöffnung in das Monochromator-System eingekoppelte elektromagnetische Strahlung durch Verschieben zumindest einer ersten Linse eines ersten Monochromators des Systems entlang ihrer optischen Achse zum Prisma des Monochromators hin oder von diesem weg kollimiert wird. Durch ein derartiges Verschieben der ersten Linse eines ersten Monochromators wird weiterhin die chromatische Verschiebung des Fokuspunktes an der Austrittsöffnung zumindest teilweise kompensierbar.

Weiterhin ist vorgesehen, dass die jeweiligen Prismen zweier aneinander angrenzender Monochromatoren des Systems derart wirkverbunden sind, dass bei Drehung eines ersten Prismas eines ersten Monochromators um einen Winkel ein zweites Prisma eines zweiten Monochromators um einen gegengleichen Winkel gedreht wird und die systeminternen Linsen mit zugehörigen Schienen oder Leisten oder ohne eine entsprechende Drehung erfahren. Somit kann eine Parallelverschiebung der elektromagnetischen Strahlung, die aus dem zweiten Prisma auftritt, gegenüber der elektromagnetischen Strahlung, welche in das erste Prisma eintritt, erreicht werden. Dies ist insbesondere zur Integration des Systems in bestehende optische Systeme von Vorteil.

Die Verschiebung der ersten und/oder der zweiten Linse sowie die Drehung der Prismen und damit auch gegebenenfalls der Schienen oder Leisten oder einer entsprechenden Drehung der Linsen können dabei computerimplementiert sein. Hierfür kann die Steuerungseinheit eine Drehung der Prismen bewirken und dabei die erste und/oder die zweite Linse derart verschieben, dass der jeweilige in Richtung der jeweiligen geteilten Öffnung bzw. der Austrittsöffnung abgebildete Wellenlänge während der Drehung auf die geteilte Öffnung bzw. auf die Austrittsöffnung fokussiert wird.

Alle Verschiebungen und Drehungen sind dabei in allen erfindungsgemäßen Verfahren insbesondere computerimplementiert, d.h. durch einen Computer in Wert und Position berechnet und per Signalübermittlung an entsprechend in einem erfindungsgemäßen Monochromator oder dem Monochromator-System zu installierende Aktuatoren übermittelt, wodurch die entsprechenden Verschiebungen und/oder Drehungen realisiert werden. Die computerimplementierte Steuerung der Verschiebungen und Drehungen gewährleistet dabei insbesondere eine beschleunigte Messung bzw. Einstellung mit dem Monochromator oder dem Monochromator-System und eine Verbesserung der Genauigkeit und Präzision durch hochpräzise Aktuatoren.

Die Erfindung stellt somit eine versatzfreie und kontinuierliche Einstellbarkeit oder Messung von Spektralbereichen zur Verfügung, die gegenüber dem Stand der Technik zusätzlich darin verbessert ist, dass sie die Vorteile der Prismen einer hohen Lichtstärke nutzt und somit in einem Spektralbereich vom nahen Infrarot (NIR, z.B. 3000...4000 nm) bis ins tiefe Ultraviolett (DUV, z.B. 160... 170 nm) Monochromatoren, Monochromator-Systeme und zugehörige Verfahren für Beleuchtungszwecke insbesondere für spektralabhängige photoelektrische Messungen bereitstellt. Zusätzlich kommt die erfindungsgemäße Lösung gänzlich ohne Spiegel aus, was zusätzlich die Lichtstärke verbessert.

Im Folgenden sollen Ausführungsbeispiele sowie weitere Merkmale und Vorteile der Erfindung anhand der Figuren erläutert werden. Es zeigen:
- Fig. 1: ein Ausführungsbeispiel des erfindungsgemäßen Monochromators;
- Fig. 2: ein Ausführungsbeispiel des erfindungsgemäßen Monochromator-Systems;
- Fig. 3: einen Ausschnitt eines weiteren Ausführungsbeispiels für ein Monochromator-System mit zwei entlang einer optischen Achse wirkverbundenen Prismen, welche Bestandteil jeweils aneinander angrenzender Monochromatoren des Systems sind und
- Fig. 4: experimentell mittels eines erfindungsgemäßen Monochromators ermittelte Spektren einer Breitband-Strahlungsquelle.

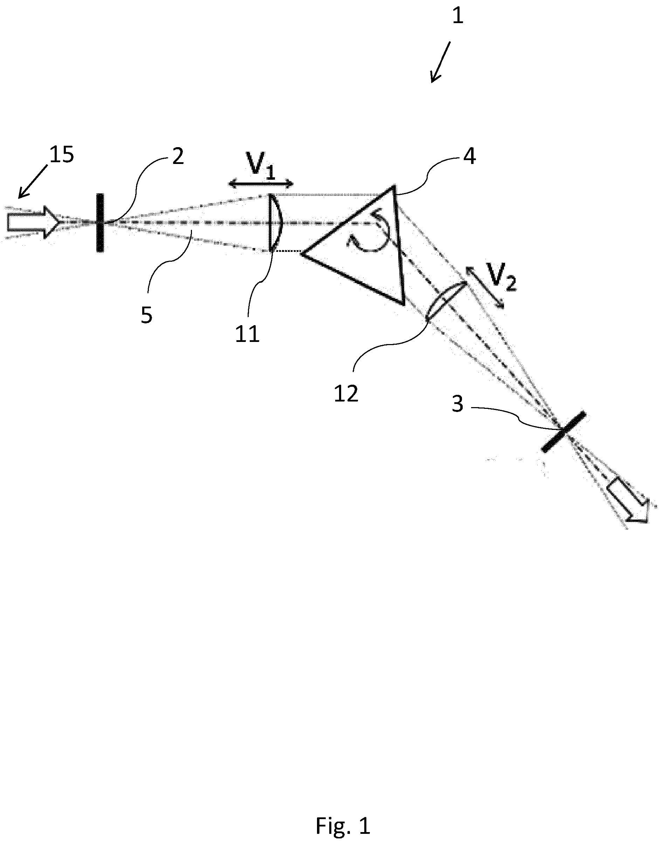

Fig. 1 zeigt ein Ausführungsbeispiel für den erfindungsgemäßen Monochromator 1. Der Monochromator 1 weist erfindungsgemäß eine Eintrittsöffnung 2, eine erste Linse 11, ein Prisma 4, eine zweite Linse 12 sowie eine Austrittsöffnung 3 auf, welche einen Strahlengang 5 definieren. Der Strahlengang 5 bildet sich insbesondere aus, sobald mittels einer Strahlungsquelle 15 elektromagnetische Strahlung über die Eintrittsöffnung 2 in den Monochromator 1 eingekoppelt wird. Das Prisma 4 ist wie in Fig. 1 ersichtlich, um eine Achse senkrecht zur Zeichenebene drehbar gelagert, wobei in Abhängigkeit von der Stellung des Prismas 4 dispersionsbedingt verschiedene Wellenlängen der eingekoppelten elektromagnetischen Strahlung in Richtung der in Bezug zum Prisma 4 ortsfesten Austrittsöffnung 3 abgebildet werden. Durch Verschieben der zweiten Linse 12 zwischen einer ersten und einer zweiten Position entlang eines zweiten Verschiebebereichs V₂, der mit der optischen Achse der zweiten Linse 12 zusammenfällt, kann die je nach Stellung des Prismas 4 ebenfalls dispersiv bedingte Verschiebung des Fokus der jeweiligen Wellenlänge derart kompensiert werden, dass der Fokus mit der Austrittsöffnung 3 übereinstimmt. Folglich können die aus dem Monochromator 1 über seine Austrittsöffnung 3 ausgekoppelten Wellenlängen durch Verdrehen des Prismas 4 und Verschieben der zweiten Linse 12 eingestellt werden. Weiterhin ist auch die erste Linse 11 entlang eines ersten Verschiebebereichs V₁, der mit der optischen Achse der ersten Linse 11 zusammenfällt, verschiebbar, sodass die auf das Prisma 4 auftreffende elektromagnetische Strahlung durch Verschieben der ersten Linse 11 kollimierbar ist, was die Intensität, der aus dem Monochromator 1 ausgekoppelten elektromagnetischen Strahlung bzw. deren Wellenlängenbereichs vorteilhaft erhöht.

Bei der ersten und/oder der zweiten Linse 11, 12 kann es sich beispielsweise um eine plankonvexe Quarzlinse mit einer Brennweite von 150 mm für eine elektromagnetische Strahlung mit einer Wellenlänge von 588 nm handeln. Die Abhängigkeit der Brennweite einer solchen Linse von der Wellenlänge ist bekannt und variiert zwischen Ultraviolett und dem Nahinfrarot, zum Beispiel im Bereich von ca. 150 nm bis ca. 3400 nm zwischen 110 mm bis 170 mm, sodass die gewünschten Wellenlängen durch entsprechendes Verschieben der jeweiligen Linse auf die Austrittsöffnung 3 abgebildet werden können.

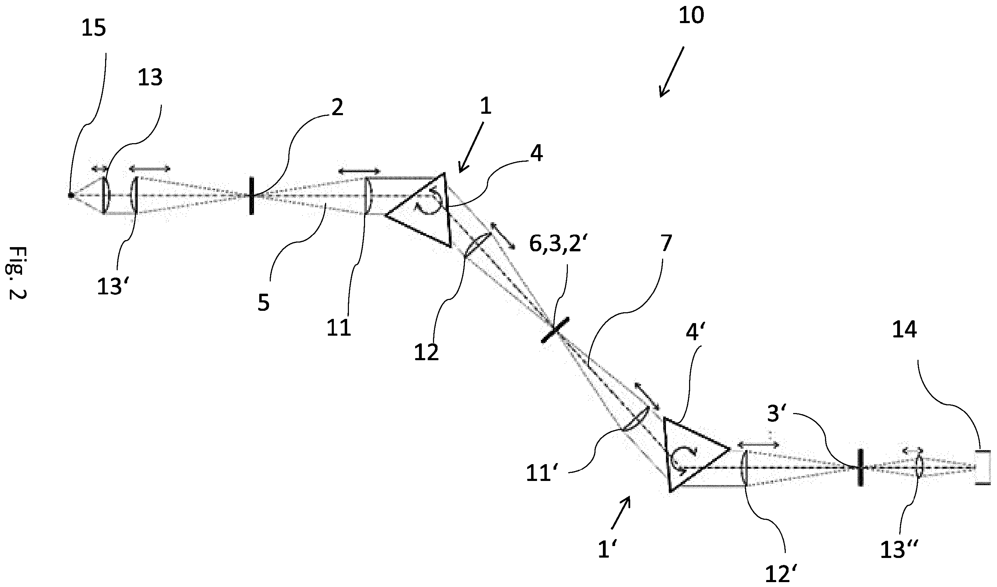

Fig. 2 zeigt ein Ausführungsbeispiel des erfindungsgemäßen Monochromator-Systems 10. Das Monochromator-System 10 in diesem Ausführungsbeispiel enthält zwei Monochromatoren 1, 1', welche über eine geteilte Öffnung 6 zwischen den Monochromatoren 1, 1' aneinandergrenzen. Die Monochromatoren 1, 1' weisen jeweils analog zum Ausführungsbeispiel aus Fig. 1 jeweils eine erste und eine zweite Linse 11, 11', 12, 12' auf. Die beiden Monochromatoren 1, 1' des Systems 10 sind derart zueinander angeordnet, dass die geteilte Öffnung 6 gleichzeitig die Austrittsöffnung 3 eines im Strahlengang 5 zuvorderst angeordneten, ersten Monochromators 1 und die Eintrittsöffnung 2' eines im Strahlengang 5 nachfolgenden, zweiten Monochromators 1' ausbildet. Die Austrittsöffnung 3' des zweiten Monochromators 1' bildet zugleich die Austrittsöffnung 3' des Monochromator-Systems 10. Die je nach Stellung des Prismas 4 des ersten Monochromators 1 in Richtung der geteilten Öffnung 6 abgebildete Wellenlänge tritt folglich über ebendiese geteilte Öffnung 6 unmittelbar in den zweiten Monochromator 1' ein, wodurch störende Einflüsse durch möglicherweise eingekoppelte Störlichtquellen vorteilhaft minimiert werden. Die im Strahlengang 5 zwischen den Prismen 4, 4' angeordneten Linsen 12, 11', und die geteilte Öffnung 6 sind hierfür entlang einer Achse 7, die der optischen Achse beider Linsen 12, 11'entspricht, zueinander ausgerichtet, wobei die zwischen den Prismen 4, 4' angeordneten Linsen 12, 11' entlang ihrer optischen Achse bzw. entlang der Achse 7 verschiebbar sind. Die zwischen den Prismen 4, 4' angeordneten Linsen 12, 11' bilden das systeminterne Linsenpaar.

In Fig. 2 ist weiterhin eine Strahlungsquelle 15 dargestellt, wobei die von der Strahlungsquelle 15 emittierte elektromagnetische Strahlung über zwei weitere Linsen 13, 13' auf die Eintrittsöffnung 2 des Systems 10 fokussiert wird. Hierzu können auch die weiteren Linsen 13, 13' jeweils über mit Doppelpfeilen angedeutete jeweilige Verschiebebereich entlang ihrer optischen Achsen verschoben werden. Bei der Strahlungsquelle 15 kann es sich beispielsweise um eine Xenon-Lampe handeln. Die entlang des Strahlengangs 5 der Strahlungsquelle 15 unmittelbar nachgelagerte weitere Linse 13 ist dabei vorzugsweise als asphärische Linse mit möglichst kurzer Brennweite ausgeführt, um im Falle einer isotrop abstrahlenden Strahlungsquelle 15 einen möglichst großen Raumwinkel zu erfassen und zum System 10 zu kollimieren bzw. zu fokussieren.

Die Prismen 4, 4' der Monochromatoren 1, 1' des Monochromator-Systems 10 sind in diesem Ausführungsbeispiel derart miteinander wirkverbunden, dass eine Drehung des Prismas 4 des ersten Monochromators 1 um einen ersten Winkel zu einer Drehung des zweiten Prismas 4' des zweiten Monochromators 1' um einen gegengleichen Winkel führt. Wie man Fig. 2 weiter entnehmen kann, resultiert dies in einer Parallelverschiebung des aus der, aus dem zweiten Prisma 4' austretenden elektromagnetischen Strahlung gegenüber der in das erste Prisma 4 eintretenden elektromagnetischen Strahlung, was insbesondere für die Integration des Systems 10 in separate optische Systeme oder Einrichtungen von Vorteil ist. Weiterhin vorteilhaft sorgt das Aneinanderschalten von Monochromatoren 1, 1' zu einem derartigen Monochromator-System 10 dazu, dass die aus dem System 10 austretende elektromagnetische Strahlung durch die serielle Selektion der ausgewählten Wellenlänge innerhalb der beiden Monochromatoren 1, 1' entsprechend weniger Störsignale, welche beispielsweise durch Reflexionen innerhalb des ersten Monochromators 1 entstehen können, als ein einzelner solcher Monochromator 1, 1' aufweist. Der zum Streulicht relative Anteil der ausgewählten Wellenlänge an der gesamten aus dem Monochromator-System 10 austretenden elektromagnetischen Strahlung ist folglich höher als beim einzelnen Monochromator 1, 1'. Werden die Prismen 4, 4' wie hier beschrieben gedreht, wird folglich die aus dem Monochromator-System 10 austretende Wellenlänge kontinuierlich verändert, sodass ein Wellenlängenbereich kontinuierlich durchstimmbar ist. Das Monochromator-System 10 eignet sich folglich insbesondere vorteilhaft zur Bestimmung von Spektren einer Strahlungsquelle 15.

Entlang des Strahlengangs 5, betrachtet hinter der Austrittsöffnung 3' des Monochromator-Systems 10, ist in diesem Ausführungsbeispiel des Weiteren eine zusätzliche weitere Linse 13" angeordnet. Über diese zusätzliche weitere Linse 13" kann die aus dem System 10 austretende elektromagnetische Strahlung auf eine Probe 14 gelenkt werden, beispielsweise für experimentelle Zwecke wie photoelektrische Messungen, insbesondere im Zusammenhang mit Oberflächenphotospannung.

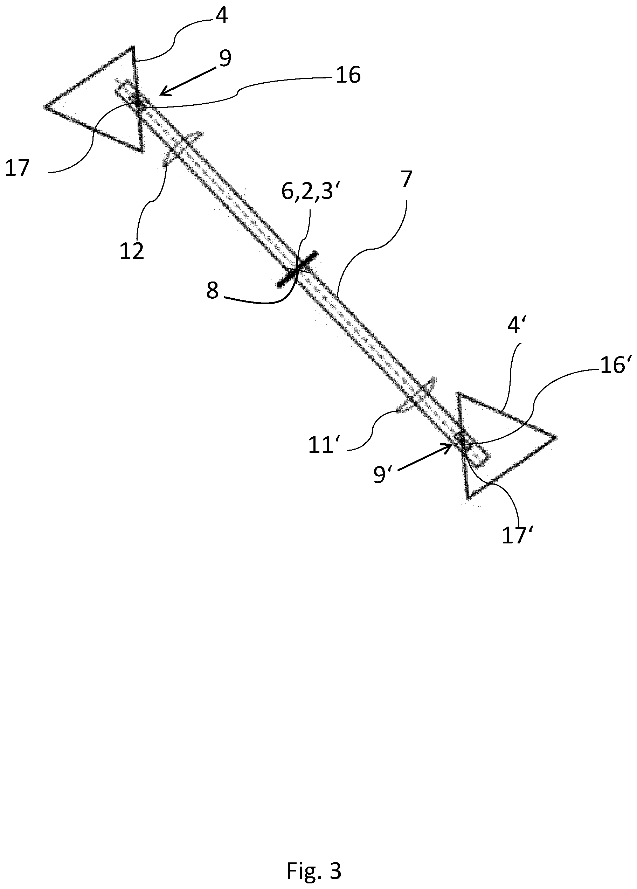

Fig. 3 zeigt einen Ausschnitt eines erfindungsgemäßen Ausführungsbeispiels für ein Monochromator-System 10, wobei die Prismen 4, 4' zweier aneinander angrenzender Monochromatoren 1, 1' entlang der Achse 7, die der optischen Achse des systeminternen Linsenpaars 12, 11' entspricht, über eine Schiene miteinander wirkverbunden sind. Analog zum Ausführungsbeispiel aus Fig. 2 bildet die geteilte Öffnung 6 des Systems 10 hier gleichzeitig die Austrittsöffnung 3 des ersten Monochromators 1 und die Eintrittsöffnung 2' des zweiten Monochromators 1'.

Die in Fig. 3 dargestellte Schiene, die entlang der Achse 7 angeordnet ist, ist weiterhin um eine senkrecht zur Achse 7 ausgebildete Drehachse 8 drehbar, welche mit der geteilten Öffnung 6 zusammenfällt und parallel zu den Drehachsen der Prismen 4, 4' orientiert ist. Somit kann die Schiene um die geteilte Öffnung 6 gedreht werden. Ferner ist die Schiene über jeweils eine Aufhängung 9, 9' mit den Prismen 4, 4' verbunden. Die Aufhängungen 9, 9' weisen dabei jeweils einen Zapfen 17, 17' auf, welcher vorzugsweise starr mit den Prismen 4, 4' verbunden ist. Die Zapfen 17, 17' sind wiederum innerhalb entlang eines Schlitzes 16, 16' der Schiene spielbehaftet, sodass die Schiene entlang der Achse 7 an den Prismen 4, 4' führbar ist.

Eine Drehung eines der beiden Prismen 4, 4' um einen Winkel bewirkt somit einerseits eine Drehung der Schiene entlang der Achse 7 um die Drehachse 8 und andererseits eine Drehung des anderen der beiden Prismen 4, 4' um einen gegengleichen Winkel. Dies ermöglicht in technisch einfacher Weise einerseits eine Wirkverbindung zwischen den beiden Prismen 4, 4' zur gegengleichen Drehung der Prismen 4, 4', und andererseits eine an die Drehung gekoppelte Drehung einer Schiene oder Leiste oder ähnlichem entlang der Achse 7, wobei das entlang der Achse 7 auf der Schiene angeordneten systeminterne Linsenpaar 12, 11' ebenfalls entsprechend gedreht wird, was die Strahlführung innerhalb des Systems 10 erheblich vereinfacht.

In alternativer Ausführungsform ist für einen einzelnen Monochromator 1 vorgesehen, dass eine Schiene oder Leiste entlang der Achse 7 lediglich einen, sich zwischen der Austrittsöffnung 3 des Monochromators 2 und dem Prisma 4 erstreckenden Schenkel bildet, wobei die Schiene um eine Drehachse 8 drehbar an der Austrittsöffnung 3 angeordnet ist und wobei die Drehachse 8 analog zu Fig. 3 mit der Austrittsöffnung 3 zusammenfällt. Die Schiene oder Leiste ist dabei weiterhin über lediglich eine Aufhängung 9 an dem Prisma 4 des Monochromators 1 zur Drehung führbar oder geführt. Auf der Schiene oder Leiste ist zudem die Linse 12 verschiebbar angeordnet, welche somit bei Drehung des Prismas 4 ebenfalls gedreht wird (Ohne gesonderte Abbildung.)

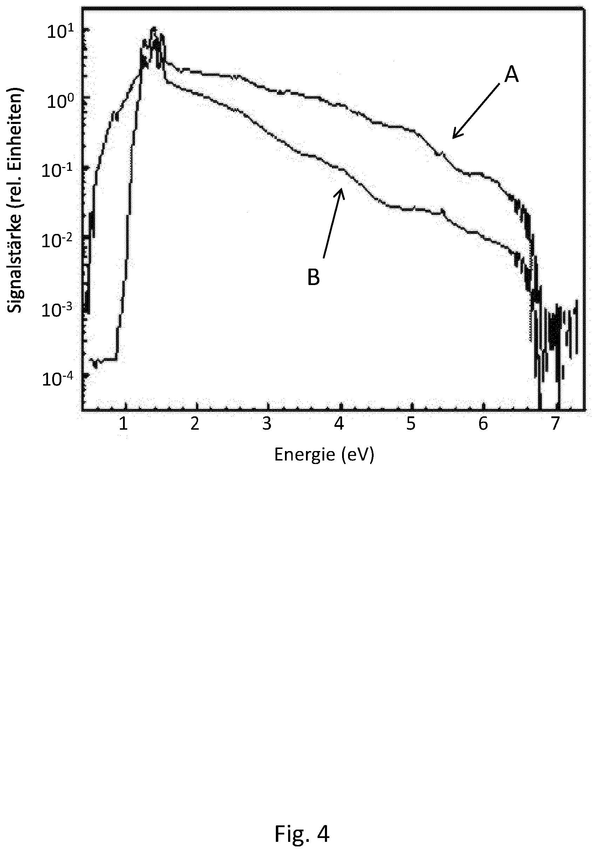

Fig. 4 zeigt experimentell ermittelte Spektren der relativen Signalstärke am Ausgangsspalt 3 eines erfindungsgemäßen Monochromators 1. Spektren wurden sowohl mit einer Si-Photodiode -Kurve B- als auch mit einem Pyrodetektor -Kurve A- gemessen. Als Strahlungsquelle 15 diente eine Breitband-Strahlungsquelle basierend auf laserbetriebener Anregung eines Plasmas, welches sichtbare und ultraviolette elektromagnetische Strahlung abstrahlt (LDLS EQ-99X, Hamamatsu). Die Eintritts- und die Austrittsöffnung 2, 3 waren dabei jeweils spaltförmig, mit einer Spaltbreite von 0.1 mm (Kurve A) bzw. 0.2 mm (Kurve B) ausgeformt. Das den Monochromator 1 und insbesondere das Prisma 4 umgebende Medium war Luft. Der vom Monochromator 1 abgedeckte Spektralbereich erstreckt sich von zwischen 3100 nm (0.4 eV) und 2480 nm (0.5 eV) bis etwa zwischen 190,74 nm (6.5 eV) und 187,85 nm (6.6 eV), wobei der Spektralbereich bei den höheren Photonenenergien im Ultraviolett durch Absorption von Sauerstoff begrenzt ist. Im Vakuum bzw. in nicht absorbierender Atmosphäre kann der Monochromator 1 bis 169,84 nm (7.3 eV) eingesetzt werden. Wie man Fig. 4 entnehmen kann, werden die Spektrallinien der Breitband-Lichtquelle sehr gut aufgelöst, was für die Güte der Monochromatisierung spricht.

Alternativ zur hier verwendeten Strahlungsquelle können selbstverständlich auch beliebig andere insbesondere breitbandige Strahlungsquellen verwendet werden deren Spektren im Spektralbreich des Monochromators liegen.

### Bezugszeichenliste

| | |
|---|---|
| Monochromator | 1, 1' |
| Eintrittsöffnung | 2, 2' |
| Austrittsöffnung | 3, 3' |
| Prisma | 4, 4' |
| Strahlengang | 5 |
| geteilte Öffnung | 6 |
| Achse | 7 |
| Drehachse | 8 |
| Aufhängung | 9, 9' |
| Monochromator-System | 10 |
| Erste Linse | 11, 11' |
| Zweite Linse | 12, 12' |
| Weitere Linse | 13, 13', 13" |
| Probe | 14 |
| Strahlungsquelle | 15 |
| Schlitz | 16, 16' |
| Zapfen | 17, 17' |
| Erster Verschiebebereich | V₁ |
| Zweiter Verschiebebereich | V₂ |

## Patentansprüche

1. Monochromator (1), mindestens aufweisend eine Eintrittsöffnung (2) für elektromagnetische Strahlung sowie eine Austrittsöffnung (3), ein Prisma (4) und eine erste und eine zweite Linse (11, 12), wobei die erste Linse (11) in einem Strahlengang (5) zwischen dem Prisma (4) und der Eintrittsöffnung (2) und die zweite Linse (12) im Strahlengang (5) zwischen dem Prisma (4) und der Austrittsöffnung (3) angeordnet ist,
**dadurch gekennzeichnet, dass**
das Prisma (4) in Bezug zu der Eintrittsöffnung (2) und Austrittsöffnung (3) zwischen zumindest einer ersten und einer zweiten Stellung drehbar ist, wobei in der ersten Stellung eine erste Wellenlänge einer einfallenden elektromagnetischen Strahlung auf die Austrittsöffnung (3) abgebildet wird und wobei in der zweiten Stellung eine zweite Wellenlänge auf die Austrittsöffnung (3) abgebildet wird und wobei zumindest die zweite Linse (12) korrespondierend zur mindestens ersten und zweiten Stellung des Prismas (4) entlang ihrer optischen Achse zwischen einer ersten und einer zweiten Position verschiebbar ist und wobei die zweite Linse (12) auf einer Schiene oder Leiste zur Verschiebung angeordnet ist, welche sich zwischen dem Prisma (4) und der Austrittsöffnung (3) erstreckt, sodass eine chromatische Verschiebung eines Fokus der zweiten Linse (12) an der Austrittsöffnung (3) kompensierbar ist und die Schiene oder Leiste an dem Prisma (4) aufgehängt ist und um eine Drehachse (8), welche mit der Austrittsöffnung (3) zusammenfällt, drehbar angeordnet ist.

2. Monochromator (1) nach Anspruch 1, wobei die erste Linse (11) weiterhin entlang ihrer optischen Achse zwischen der Eintrittsöffnung (2) und dem Prisma (4) verschiebbar ist, sodass durch die Eintrittsöffnung (2) einfallende elektromagnetische Strahlung durch Verschieben der ersten Linse (11) in Richtung des Prismas (4) oder von diesem weg kollimierbar und die chromatische Verschiebung des Fokus kompensierbar ist.

3. Monochromator-System (10), aufweisend mindestens zwei Monochromatoren (1) gemäß Anspruch 1 oder 2 und wobei die Monochromatoren (1, 1') paarweise über jeweils eine geteilte Öffnung (6) aneinander angrenzen, indem die eine geteilte Öffnung (6) gleichzeitig eine Austrittsöffnung (3) eines ersten Monochromators (1) sowie eine Eintrittsöffnung (2') eines zweiten Monochromators (1') bildet und die im Strahlengang (5) zwischen den Prismen (4, 4') aneinandergrenzender Monochromatoren (1, 1') angeordneten Linsen (12, 11') und die jeweils geteilte Öffnung (6) entlang einer Achse (7), die der optischen Achse der Linsen (12, 11') entspricht, zueinander ausgerichtet und wobei die im Strahlengang (5) zwischen den Prismen (4, 4') aneinandergrenzender Monochromatoren (1, 1') angeordneten Linsen (12, 11') entlang ihrer optischen Achsen auf Schienen oder Leisten verschiebbar sind, so dass, eine, durch eine Drehung zwischen einer mindestens ersten und zweiten Stellung eines Prismas (4, 4) auswählbaren Wellenlänge auf die Austrittsöffnung (3) des Systems (10) fokussierbar und die elektromagnetische Strahlung nach Passieren der jeweils zugehörigen geteilten Öffnung (6) kollimierbar ist und wobei die Schienen oder Leisten um eine jeweilige Drehachse (8) drehbar sind, und wobei die Drehachse lokal mit der jeweiligen geteilten Öffnung (6) zusammenfällt und wobei die Schienen oder Leisten an jeweils einer Aufhängung (9, 9') an den Prismen (4, 4') der aneinander angrenzenden Monochromatoren (1) führbar oder geführt sind, sodass sich bei Drehung der Prismen (4, 4') die Schienen oder Leisten mit den zwischen den jeweiligen Prismen (4, 4') aneinandergrenzender Monochromatoren (1, 1') angeordneten Linsen (12, 11') um die Drehachse (8) drehen.

4. Der Monochromator (1) oder das Monochromator-System (10) gemäß einem der vorhergehenden Ansprüche, aufweisend jeweils pro Monochromator (1, 2) mindestens eine weitere Linse (13, 13') zur Kollimation und/oder Fokussierung der elektromagnetischen Strahlung der mindestens ersten und/oder zweiten Wellenlänge entsprechend der mindestens ersten und zweiten Stellung der Prismen (4, 4') der elektromagnetischen Strahlung.

5. Der Monochromator (1) oder das Monochromator-System (10) gemäß einem der vorhergehenden Ansprüche, wobei die Eintrittsöffnungen (2, 2') und/oder die Austrittsöffnungen (3, 3') und/oder zumindest eine jeweilige geteilte Öffnung (6) spaltförmig sind.

## Claims

1. Monochromator (1), having at least an inlet opening (2) for electromagnetic radiation and an outlet opening (3), a prism (4) and a first and a second lens (11, 12), the first lens (11) being arranged in a beam path (5) between the prism (4) and the inlet opening (2) and the second lens (12) being arranged in the beam path (5) between the prism (4) and the outlet opening (3),
**characterized in that**
the prism (4) is rotatable in relation to the inlet opening (2) and outlet opening (3) between at least a first and a second position, wherein in the first position a first wavelength of an incident electromagnetic radiation is imaged onto the exit opening (3) and wherein in the second position a second wavelength is imaged onto the exit opening (3) and wherein at least the second lens (12) is displaceable along its optical axis between a first and a second position corresponding to the at least first and second position of the prism (4) and wherein the second lens (12) is arranged on a rail or bar for displacement, which extends between the prism (4) and the exit opening (3) , so that a chromatic displacement of a focus of the second lens (12) at the exit opening (3) can be compensated and the rail or bar is suspended from the prism (4) and is arranged rotatably about an axis of rotation (8) which coincides with the exit opening (3) .

2. The monochromator (1) according to claim 1, wherein the first lens (11) is further displaceable along its optical axis between the entrance opening (2) and the prism (4), so that electromagnetic radiation incident through the entrance opening (2) can be collimated by displacing the first lens (11) towards or away from the prism (4) and the chromatic shift of the focus can be compensated.

3. Monochromator system (10), having at least two monochromators (1) according to claim 1 or 2 and wherein the monochromators (1, 1') adjoin one another in pairs via a respective divided opening (6), in that the one divided opening (6) simultaneously forms an exit opening (3) of a first monochromator (1) and an entrance opening (2') of a second monochromator (1') and the lenses (12, 11') arranged in the beam path (5) between the prisms (4, 4') of adjacent monochromators (1, 1') and the respectively divided opening (6) are aligned with one another along an axis (7) which corresponds to the optical axis of the lenses (12, 11'), and wherein the lenses (12, 11') arranged in the beam path (5) between the prisms (4, 4') of adjacent monochromators (1, 1') are displaceable along their optical axes on rails or bars, so that a wavelength selectable by rotation between at least a first and a second position of a prism (4, 4) can be focused on the outlet opening (3) of the system (10) and the electromagnetic radiation can be collimated after passing the respective associated divided opening (6), and wherein the rails or bars are rotatable about a respective axis of rotation (8), and wherein the axis of rotation coincides locally with the respective divided opening (6) and wherein the rails or bars can be guided or are guided on a respective suspension (9, 9') on the prisms (4, 4') of the adjoining monochromators (1), so that when the prisms (4, 4') are rotated, the rails or bars rotate about the axis of rotation (8) with the lenses (12, 11') arranged between the respective prisms (4, 4') of adjoining monochromators (1, 1').

4. The monochromator (1) or the monochromator system (10) according to one of the preceding claims, comprising in each case per monochromator (1, 2) at least one further lens (13, 13') for collimating and/or focussing the electromagnetic radiation of the at least first and/or second wavelength corresponding to the at least first and second position of the prisms (4, 4') of the electromagnetic radiation.

5. The monochromator (1) or the monochromator system (10) according to one of the preceding claims, wherein the inlet openings (2, 2') and/or the outlet openings (3, 3') and/or at least one respective divided opening (6) are slit-shaped.

## Revendications

1. Monochromateur (1), présentant au moins une ouverture d'entrée (2) pour un rayonnement électromagnétique ainsi qu'une ouverture de sortie (3), un prisme (4) et une première et une deuxième lentilles (11, 12), la première lentille (11) étant disposée dans un trajet de faisceau (5) entre le prisme (4) et l'ouverture d'entrée (2) et la deuxième lentille (12) étant disposée dans le trajet de faisceau (5) entre le prisme (4) et l'ouverture de sortie (3),
**caractérisé en ce que**
le prisme (4) peut tourner par rapport à l'ouverture d'entrée (2) et à l'ouverture de sortie (3) entre au moins une première et une deuxième position, dans laquelle, dans la première position, une première longueur d'onde d'un rayonnement électromagnétique incident est reproduite sur l'ouverture de sortie (3) et dans laquelle, dans la deuxième position, une deuxième longueur d'onde est reproduite sur l'ouverture de sortie (3) et dans laquelle au moins la deuxième lentille (12) peut être déplacée le long de son axe optique entre une première et une deuxième position, en correspondance avec au moins la première et la deuxième position du prisme (4) et dans laquelle la deuxième lentille (12) est disposée sur un rail ou une barre pour le déplacement, qui s'étend entre le prisme (4) et l'ouverture de sortie (3), de sorte qu'un déplacement chromatique d'un foyer de la deuxième lentille (12) peut être compensé au niveau de l'ouverture de sortie (3) et le rail ou la barre est suspendu au prisme (4) et est disposé de manière à pouvoir tourner autour d'un axe de rotation (8) qui coïncide avec l'ouverture de sortie (3).

2. Monochromateur (1) selon la revendication 1, dans lequel la première lentille (11) peut en outre être déplacée le long de son axe optique entre l'ouverture d'entrée (2) et le prisme (4), de sorte que le rayonnement électromagnétique incident à travers l'ouverture d'entrée (2) peut être collimaté et le décalage chromatique du foyer peut être compensé en déplaçant la première lentille (11) vers le prisme (4) ou en l'éloignant de celui-ci.

3. Système de monochromateurs (10), présentant au moins deux monochromateurs (1) selon la revendication 1 ou 2 et dans lequel les monochromateurs (1, 1') sont contigus l'un à l'autre par paires par l'intermédiaire respectivement d'une ouverture divisée (6), en ce que l'une des ouvertures divisées (6) forme simultanément une ouverture de sortie (3) d'un premier monochromateur (1) ainsi qu'une ouverture d'entrée (2') d'un deuxième monochromateur (1') et en ce que les lentilles disposées dans le trajet des rayons (5) entre les prismes (4, 4') de monochromateurs (1, 1') contigus et l'ouverture (6) respectivement divisée sont alignées l'une par rapport à l'autre le long d'un axe (7) qui correspond à l'axe optique des lentilles (12, 11'), et les lentilles (12, 11') disposées dans le trajet des rayons (5) entre les prismes (4, 4') de monochromateurs (1, 1') contigus peuvent être déplacées le long de leurs axes optiques sur des rails ou des barres, de telle sorte qu'une longueur d'onde pouvant être sélectionnée par une rotation entre au moins une première et une deuxième position d'un prisme (4, 4) puisse être focalisée sur l'ouverture de sortie (3) du système (10) et que le rayonnement électromagnétique puisse être collimaté après avoir traversé l'ouverture divisée (6) respectivement associée, et les rails ou barres pouvant tourner autour d'un axe de rotation (8) respectif, et dans lequel l'axe de rotation coïncide localement avec l'ouverture divisée respective (6) et dans lequel les rails ou les barres peuvent être guidés ou sont guidés sur une suspension respective (9, 9') sur les prismes (4, 4') des monochromateurs adjacents (1), de sorte que, lors de la rotation des prismes (4, 4'), les rails ou les barres tournent autour de l'axe de rotation (8) avec les lentilles (12, 11') disposées entre les prismes respectifs (4, 4') de monochromateurs adjacents (1, 1').

4. Le monochromateur (1) ou le système de monochromateur (10) selon l'une des revendications précédentes, présentant respectivement par monochromateur (1, 2) au moins une autre lentille (13, 13') pour collimater et/ou focaliser le rayonnement électromagnétique d'au moins la première et/ou la deuxième longueur d'onde selon au moins la première et la deuxième position des prismes (4, 4') du rayonnement électromagnétique.

5. Le monochromateur (1) ou le système de monochromateur (10) selon l'une des revendications précédentes, dans lequel les ouvertures d'entrée (2, 2') et/ou les ouvertures de sortie (3, 3') et/ou au moins une ouverture divisée respective (6) sont en forme de fente.
